(19) Europäisches Patentamt

European Patent Office

Office européen des brevets

(11) **EP 0 987 559 A2**

(12) **EUROPEAN PATENT APPLICATION**

(43) Date of publication:
22.03.2000 Bulletin 2000/12

(51) Int. Cl.[7]: **G01S 5/14**

(21) Application number: 99117525.8

(22) Date of filing: 04.09.1999

(84) Designated Contracting States:
**AT BE CH CY DE DK ES FI FR GB GR IE IT LI LU MC NL PT SE**
Designated Extension States:
**AL LT LV MK RO SI**

(30) Priority: **15.09.1998 US 153823**

(71) Applicant: **Leica Geosystems Inc.
Norcross, GA 30071 (US)**

(72) Inventors:
• **Balodis, Miroslaw
  Garden Grove, CA 92840 (US)**
• **Keegan, Richard Gerald
  Torrance, CA 90503 (US)**

(74) Representative:
**Kaminski, Susanne, Dr. et al
Büchel, Kaminski & Partner Patentanwälte Est.,
Letzanaweg 25-27
9495 Triesen (LI)**

(54) **Direct sampling global positioning system (GPS) receiver**

(57) A direct sampling technique for use in global positioning system (GPS) receivers, in which received signals are separated into two frequency bands centered at frequencies L1 and L2, respectively, and are then digitally sampled using analog-to-digital converters (24.1 and 24.2) controlled by sampling clock signals derived from a common clock signal generator (26). The clock signal generator frequency and the digital sampling frequencies are selected to provide a sampled carrier frequency that is as low as possible without resulting in a spread spectrum with components in both a positive and a negative frequency region of the spectrum, thereby preserving the real-valued nature of the signal samples. For L1 at 308F and L2 at 240F , where F=5.115 , a common clock frequency of 8.5F satisfies these requirements by providing aliasing sampling rates of 306F and 238F, respectively, with L1 and L2 both having sampled carrier frequencies of 2F.

FIG. 1

EP 0 987 559 A2

**Description**

**BACKGROUND OF THE INVENTION**

This invention relates generally to Global Positioning System ("GPS") signal receivers. More particularly, the present invention relates to a novel technique for sampling signals received in a GPS receiver.

**Overview of GPS:**

The global positioning system (GPS) may be used for determining the position of a user with a GPS receiver located on or near the earth, from signals received from multiple orbiting satellites. The orbits of the GPS satellites are arranged in multiple planes, in order that the signals can be received from at least four GPS satellites at any selected point on or near the earth.

The nature of the signals transmitted from GPS satellites is well known from the literature, but will be described briefly by way of background. Each satellite transmits two spread-spectrum signals in the L band, known as L1 and L2, with separate carrier frequencies. Two signals are needed if it is desired to eliminate an error that arises due to the refraction of the transmitted signals by the ionosphere. Each of the carrier signals is modulated in the satellite by at least one of two pseudorandom noise (PRN) codes unique to the satellite, and transmitted as a spread spectrum signal. This allows the L-band signals from a number of satellites to be individually identified and separated in a receiver. Each carrier is also modulated by a slower-varying data signal defining the satellite orbits and other system information. One of the PRN codes is referred to as the C/A (clear/acquisition) code, while the second is known as the P (precise) code.

In the GPS receiver, signals corresponding to the known P code and C/A code may be generated in the same manner as in the satellite. The L1 and L2 signals from a given satellite are demodulated by aligning the phases, i.e., by adjusting the timing, of the locally-generated codes with those modulated onto the signals from that satellite. In order to achieve such phase alignment the locally generated code replicas are correlated wit the received signals until the resultant output signal power is maximized. Since the time at which each particular bit of the pseudorandom sequence is transmitted from the satellite is defined, the time of receipt a particular bit can be used as a measure of the transit time or range to the satellite. Because the C/A and P codes are unique to each satellite, a specific satellite may be identified based on the results of the correlations between the received signals and the locally-generated C/A and P code replicas.

Each receiver "channel" within the GPS receiver is used to track the received signal from a particular satellite. A synchronization circuit of each channel provides locally generated code and carrier replicas, which are synchronous with each other. During acquisition of the code phase within a particular channel, the received satellite signal is correlated with a discrimination pattern comprised of some combination of "early" and "late" versions of the channel's locally generated code replica. The resultant early-minus-late correlation signals are accumulated and processed to provide feedback signals to control code and carrier synchronization.

Although there are several ways to create a spread spectrum signal, the one most often used is "direct spreading" with a pseudorandom code, which is the technique used in GPS. A direct sequence spread spectrum signal is normally created by biphase modulating a narrowband signal with a pseudorandom code. Each GPS satellite normally transmits three spread spectrum navigation signals. One is on the L2 carrier signal and is based on the P code from a P code generator, and two are on the L1 carrier signal and are based on the P code from the P code generator and the C/A code from a C/A code generator, respectively. To accomplish this, the L1 carrier signal is first divided into two components that are in phase quadrature. Each of these components is individually modulated with navigation signals before being combined, amplified, and transmitted.

The frequency spectrum resulting from this process is one in which the original carrier frequency at $F_0$ is suppressed, and the total signal energy is spread over a bandwidth around $F_0$ of plus and minus the code clock frequency to first nulls. Spectral components outside this bandwidth also are created, but at ever lower amplitude with frequency separation.

The key functions of each satellite are all driven by a single clock with a frequency of 10.23 MHz. The L1 carrier frequency of 1575.42 MHz is obtained by multiplying 10.23 MHz by 154. The L2 carrier frequency of 1227.6 MHz is 120 times the clock. The P code rate is 10.23 MHz and is obtained directly from the clock. The C/A code rate is one tent the clock frequency and is obtained through a frequency divider. Even a 50 bit per second data rate used to retrieve data from a memory is derived from the same clock. It can be said that all of these signals are coherent because they are derived from a single clock.

In a typical GPS receiver, a single antenna collects all available signals, which are processed through a filter, an amplifier and a downconverter to obtain a lower intermediate frequency (IF) for further processing. Only then is the composite signal digitally sampled, to facilitate further processing of the signals in digital form. Although GPS receiver designers have been well aware of the theoretical possibility of constructing a receiver employing direct sampling, i.e., one that digitally samples the received signals without first downconverting to a lower frequency, some significant practical difficulties have precluded such a design prior to the present invention.

The sampling rate must be chosen to adequately reproduce the signal in digital form (Nyquist rate) without too much loss of signal-to-noise ratio and without folding out-of-band noise into the signal bandwidth (a phenomenon known as aliasing). Signal sampling also often performs a frequency downconversion of the sampled signal. If the carrier frequency (whether present or suppressed) of the signal being sampled has a frequency of $(N+\delta)$ cycles per sample clock period, where $\delta$ is a fraction between $\pm 0.5$, the carrier frequency of the sampled signal will be $\delta F_S$, where $F_S$ is the sampling frequency. For example, if $\delta$ were 0.25, the phase of the sampled signal would rotate by one quarter of a cycle between samples. Thus four samples would be needed to reproduce a full carrier cycle, and the cater frequency of the sampled signal would be one-fourth of the sampling frequency. The value 0.25 is not required, but it is typical of digital sampling techniques because of design constraints. A smaller fraction reduces the sampled cater frequency, which must be high enough to support the full spread spectrum bandwidth without folding at zero frequency. A larger fraction raises the sampled carrier frequency, and with it the upper edge of the spread spectrum signal, which cannot exceed the sampling frequency without unwanted aliasing. Accordingly, the sampling frequency and the overlap fraction $(\delta)$ are critical to receiver performance. A related goal is to obtain a sampled cater frequency as low as possible to minimize processing power requirements of the receiver, since, in general, higher signal frequencies result in higher power requirements. Another important constraint is that selection of the sampling frequency and the resultant sampled carrier frequency must satisfy these requirements for both the L1 and the L2 signals. The present invention provides a solution that meets all these criteria.

## SUMMARY OF TILE INVENTION

The present invention resides in a global positioning system (GPS) direct sampling system, comprising an antenna circuit for receiving GPS signals transmitted from multiple GPS satellites as spread spectrum signals at least one frequency band having a central carrier frequency; filtering and amplifying means, for separating the received GPS signals into a frequency band corresponding to the transmitted signals; and means for sampling the signals in the frequency band at sampling rates derived from a common clock signal generator. Significantly, the means for sampling the signals produces a digitized spread spectrum signal that ranges over only positive or only negative frequencies. Moreover, the means for sampling the signals provides a sampled carrier frequency having the lowest possible value that will result in the spread spectrum signal being located in positive frequencies only or negative frequencies only, thereby maintaining the real-valued nature of the signal samples.

In the presently preferred embodiment of the invention, there are two received GPS signals, having carrier frequencies of 308F and 240F, respectively, plus a Doppler frequency correction, where F=5.115 MHz (megahertz). The means for sampling the signals includes two analog-to-digital converters connected to receive the separated GPS signals from the filtering and amplifying means, and a sample clock signal generator for providing sample clock signals at rates of 306F and 238F, respectively. The analog-to-digital converters both produce digital output signals at sampled signal carrier rates of 2F, plus a Doppler component.

In the preferred embodiment of the invention, the sample clock generator is a single clock signal generator operating at a frequency of 8.5F and capable of providing aliasing components at 306F and 238F megahertz, for use as sample clock signals in the respective analog-to-digital converters. The receiver further includes clock processing circuitry coupled to the sample clock generator, for generating a stream of phase angles corresponding to a signal at frequency 2F; means for combining the phase angles corresponding to frequency 2F with phase angles corresponding to the Doppler frequency component associated with each of the two GPS signals from each satellite, to produce a steam of successive phase angles corresponding to a frequency of 2F plus a Doppler component; means for looking up sine and cosine values corresponding to the successive phase angles; and means for multiplying the sine and cosine values by corresponding digital samples obtained from the respective analog-to-digital converters, to obtain a succession of sine and cosine signal products from which in-phase (I) and quadrature (Q) components of the received signals may be conventionally computed.

The invention may also be expressed as a method for obtaining digitized global positioning system (GPS) signals by direct sampling in a GPS receiver, the method comprising the steps of receiving GPS signals transmitted from multiple GPS satellites as spread spectrum signals in at least one frequency band having a carrier frequencies; separating the received GPS signals into a frequency band by filtering and amplifying the received signals; and sampling the resulting signals at sampling rates derived from a common clock signal generator. The sampling step produces a digitized spread spectrum signal that ranges over all-positive frequencies or all-negative frequencies only. Moreover, the sampling step provides a sampled carrier frequency having the lowest value that will result in locating the spread spectrum signal in all-positive or all-negative frequencies only, thereby preserving the real-valued nature of the sampled signals.

In the illustrative embodiment of the invention, there are two received GPS signals, having carrier frequencies of 308F and 240F, respectively, plus a Doppler frequency correction, where F=5.115 MHz (megahertz);

and the sampling step includes performing an analog-to-digital conversion of the separated GPS signals, and controlling the analog-to-digital conversion with sample clock rates of 306F and 238F, respectively, for the two GPS signals. The step of performing analog-to-digital conversion results in digital output signals at a sampled cater frequency of 2F, plus a Doppler component, for both GPS signals. More specifically, the sampling step includes providing sample clock signals at frequencies 306F and 238F, respectively, from a single clock generator operating at 8.5F and capable of providing aliasing components at 306F and 238F.

The method further includes the steps of generating from the single clock generator a steam of phase angles corresponding to a signal at frequency 2F; combining the phase angles corresponding to the frequency 2F with phase angles corresponding to the Doppler frequency component associated with each of the two GPS signals from each satellite, to produce a stream of successive phase angles corresponding to a frequency of 2F plus a Doppler component; looking up sine and cosine values corresponding to the successive phase angles obtained from the combining step; and multiplying the sine and cosine values by corresponding digital sample values obtained from the respective analog-to-digital conversions, to obtain a succession of sine and cosine products from which in-phase (I) and quadrature (Q) component of the received signals may be conventionally computed.

It will be appreciated from the foregoing that the present invention represents a significant advance in the field of GPS receivers. In particular, the invention provides a direct sampling technique, with a sampled carrier frequency that is as low as possible without moving any spread spectrum components across a zero-frequency line in the spectrum, thereby preserving the real-valued nature of the sampled signals. Other aspects and advantages of the invention will become apparent from the detailed description, which follows a brief description of the drawings.

## BRIEF DESCRIPTION OF THE DRAWINGS

FIG. 1 is a block diagram of a portion of a GPS receiver in accordance with the present invention; and
FIG. 2 is a block diagram showing in more detail how sine and cosine values are generated in FIG. 1.

## DESCRIPTION OF THE PREFERRED EMBODIMENT

As shown in the drawing for purposes of illustration, the present invention pertains to a direct sampling technique for use in global positioning system (GPS) receivers. As described in the foregoing background section, GPS signals are transmitted from multiple orbiting satellites on two signal carriers in the L-band of the electromagnetic spectrum, and referred to as the L1 and L2 carriers. The L1 carrier has a frequency of 1,575.42 MHz (megahertz) and the L2 carrier has a frequency of 1,227.6 MHz, but these frequencies are often expressed as multiples of a GPS standard frequency referred to simply as F, where F is 5.115 MHz. Thus the L1 carrier frequency may be expressed as 308F and the L2 carrier frequency as 240F. [In the technical literature relating to GPS technology, some authors define receiver frequencies in terms of multiples of a frequency f, where f = 2F = 10.23 MHz. It will be understood, of course, that the principles of the present invention are equally applicable to receivers in which the frequencies are so expressed.]

Each GPS satellite transmits signals using these L1 and L2 carriers, but the satellites are uniquely identifiable by the nature of the codes modulated onto these carriers. As described in the foregoing background section, each satellite has at least one unique pseudorandom noise (PRN) code associated with it, and each satellite modulates each carrier with at least one of the PRN codes, to form a spread spectrum signal for transmission. A GPS receiver identifies the satellites by the nature of the received PRN codes, then computes the approximate range to each satellite, and from these measurements can compute the location of the receiver to a high degree of accuracy.

As is well understood in GPS receiver design, the apparent range to each satellite, as measured by the time to transmit known pseudocode, is distorted by the Doppler effect, caused by the velocity of the satellite with respect to the receiver. Therefore, the received L1 signal is sometimes expressed as L1 + D, where D is a Doppler correction. More appropriately, the Doppler frequency is often normalized to the nominal L1 frequency, and the received L1 signal is then said to have a nominal frequency of $L1 = 308(F+d)$, where $308d = D$. Similarly, the L2 signal is said to have a nominal frequency of $L2 = 240(F+d)$. One of the functions of the receiver is, of course, to compute Doppler corrections and apply them to the pseudorange measurements, so that position measurements can be corrected for Doppler effects.

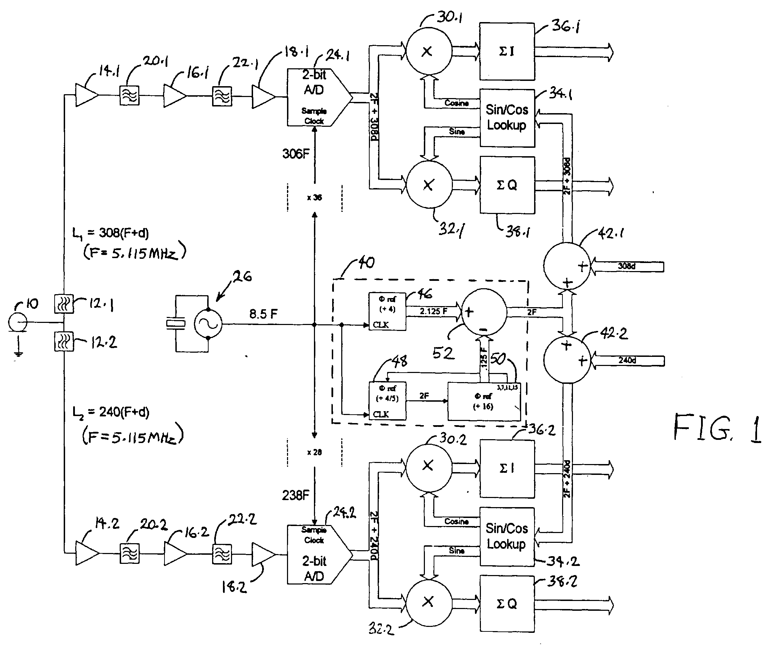

FIG. 1 depicts a portion of a GPS receiver structured in accordance with the present invention. Satellite signals are received through a common antenna feeding a coaxial feed line, indicated by reference numeral 10, and are separated into L1 and L2 signals by a pair of bandpass filters 12.1 and 12.2. The L1 signals are amplified and further filtered in amplifiers 14.1, 16.1 and 18.1 and bandpass filters 20.1 and 22.1. Similarly, the L2 signals are amplified and filtered in amplifiers 14.2, 16.2 and 18.2 and bandpass filters 20.2 and 22.2. The L1 carrier frequency is given by 308(F+d) and the L2 carrier frequency is given by 240(F+d). The amplified and filtered L1 and L2 signals, without any frequency downconversion, are input to respective digital samplers in the form of two-bit analog-to-digital converters 24.1 and 24.2, respectively.

The selection of a sampling frequency that satisfies the GPS performance requirements is critical to the direct sampling technique of the invention. Specifically, the digital sampling process must produce a sampled carrier frequency that is of sufficiently high frequency that a digital spread spectrum signal will lie either entirely in a positive range of frequencies or entirely in a negative range of frequencies. If this condition is satisfied, processing in the "front end" of the receiver can be accomplished using real-valued samples only. (When the received signals are further processed, and eventually converted to baseband signals, it will still be necessary to process in-phase and quadrature (I and Q) components, but working with only real samples in the front end provides for a significant reduction in circuit complexity.) The GPS P code spread spectrum signals have a spectrum in the range of $\pm2F$ ($\pm10.23$ MHz ) wit respect to the carrier frequency. To maintain this spectrum entirely in a positive frequency range, the sampled carrier frequency must be at least 2F. The bandwidth of the C/A code is $\pm.2F$ ($\pm1.023$ MHz), which presents less of a problem than the P code. With the sampled carrier frequency at 2F, the P code spectrum ten extends from zero to +4F in frequency. Although this is not the only solution applicable to direct sampling, it is the most desirable because it uses the lowest sampled carrier frequency that results in an all-positive-frequency spectrum and maintains the real-valued nature of the GPS PRN signals. Therefore, it would be desirable to devise a frequency plan that provides for a sampled carrier frequency of 2F in processing both the L1 and L2 carriers, both of which are encoded with P code GPS signals.

As shown in FIG. 1, the A/D converters 24.1 and 24.2 are driven from a common clock source 26, which generates a clock signal at a frequency of 8.5F. This clock frequency permits the convenient use of its 36th harmonic to provide a sampling frequency of 306F for the L1 converter 24.1, and its 28th harmonic to provide a sampling frequency of 238F for the L2 converter 24.2. Considering the L1 sampling process by way of example, and neglecting the Doppler component of L1 for the moment, one can readily conclude that each cycle of the sampling clock (at 306F) contains 308/306 carrier cycles, or 1+2/306 of a carrier cycle. The fraction 2/306 is the nominal (without Doppler) overlap fraction $\delta$ discussed in the background section of this specification. The sampled carrier frequency is, therefore, given by the product of the sampling frequency and the overlap fraction, i.e., $306F \times 2/306 = 2F$. Considering the Doppler effect, the overlap fraction is (2F+308d)/306F and the sampled signal carrier frequency is, therefore, (2F+308d). As indicated at the output of the L1 A/D converter 24.1, this is the carrier frequency of the digital samples produced by the converter.

The sampling clock signal applied to the L2 converter 24.2 is taken from the 28th harmonic of the 8.5F common clock 26. Using the same reasoning that was applied to the L1 sampling converter 24.1, it is easy to show that the sampling carrier frequency for digital samples generated by the L2 converter 24.2 is (2F+240d).

The next step shown in processing the digital signals is to generate inphase (I) and quadrature (Q) components, using conventional digital processing. As shown in FIG. 1, the digital samples from the L1 convener 24.1 are input to two multipliers 30.1 and 32.1, where each sample is multiplied by cosine and sine values, respectively, for the phase angle corresponding to the digital sample, the cosine and sine values being obtained from a sin/cos lookup memory 34.1. Successive values of the sine and cosine products from the multipliers 30.1 and 32.3 are accumulated in an I summation circuit 36.1 and a Q summation circuit 38.1. The L2 signals are processed through similar circuit components, including multipliers 30.2 and 32.2, a sin/cos lookup memory 34.2 and I and Q summation circuits 36.2 and 38.2.

The sin/cos lookup memories 34.1 and 34.2 are driven by a stream of phase angles that is also derived in part from the common clock 26 running at 8.5F. Clock processing circuitry 40 generates a stream of phase angle signals at frequency 2F from the 8.5F clock signals, as further explained below. The phase angle signals at frequency 2F are combined with Doppler correction phase angles corresponding to Doppler frequencies 308d and 240d, in frequency addition circuits 42.1 and 42.2, respectively. The resulting streams of phase angles are applied to the sin/cos lookup memories 34.1 and 34.2, respectively, to produce streams of cosine and sine signals in synchronism with the digital samples produced by the converters 24.1 and 24.2, respectively. The Doppler frequency phase angles are obtained from numerically controlled oscillators (NCOs), not shown, under the control of values for the Doppler frequencies for L1 and L2 computed in the receiver from the received signals and satellite data obtained therefrom.

The clock processing circuitry 40 includes a first digital clock circuit 46 that generates a stream of phase angles at a frequency equivalent to 2.125F, or one-fourth of the 8.5F clock frequency. Two additional clock circuits 48 and 50 cooperate to produce another stream of phase angles at a frequency equivalent to 0.125F. The two sets of phase angles are combined in what is effectively a frequency subtraction circuit 52, to produce the desired phase angle stream at an effective frequency of 2F.

More specifically, the clock circuit 48 is a frequency divider that divides the 8.5F clock reference by two different factors (four and five) to achieve close to a 2F output frequency. The circuit 48 divides the incoming clock reference by a factor four for three successive periods of an output signal, and then divides by five for the next period of the output signal. Thus, while dividing by four, each complete cycle of the output signal is derived from four complete cycles of the input signal, and when dividing by five, a complete cycle of the output signal is derived from five complete cycles of the input signal. Therefore, a total of seventeen input cycles results in a total of four output cycles. Although the output cycles are not of equal period, since every fourth cycle is twenty percent (5/4) longer than the other three, on average the output waveform from clock circuit 48 has a frequency of 4/17 of the input waveform. In other words the output of clock circuit 48 has a frequency of 8.5F *4/17 = 2F . Clock circuit 50 reduces this further with a simple divide-by-sixteen function, resulting in an output from clock circuit 50 at a frequency of 0.125F.

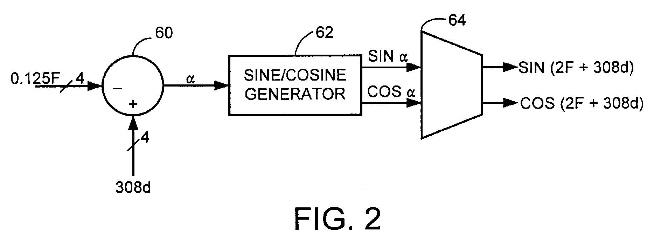

How frequency subtraction is effected in circuit 52, and how the required sine and cosine values are generated, is perhaps better understood from FIG. 2, which illustrates these functions in a slightly different manner from FIG. 1. FIG. 2 shows the 0.125F clock reference from circuit 50 as being applied first to a subtraction circuit 60, where it is subtracted digitally from the Doppler signal 308d, also in digital form. The output difference signal is referred to as an angle α, which is input to a sine/cosine generator 62, from which digital values for sin α and cos α emerge as outputs. These values are multiplied by +1 or -1 in switching circuit 64, which is controlled by a digital form of the clock reference signal at frequency 2.125F, as derived from clock circuit 46. For example, the 2.125F reference has one of four digital values (00, 01, 10 or 11) depending on whether the reference has an angular value of 0, 90, 180 or 270 degrees. The outputs from circuit 64 are $\sin(2.125F + \alpha)$ and $\cos(2.125F + \alpha)$, which are the same as sin (2F + 308d) and cos (2F + 308d). Sine and cosine values for the L2 side of the FIG. 1 diagram are obtained in a similar manner, using 240d instead of 308d as the Doppler component. In the circuit 64, the values selected for the output sine and cosine are as shown in the following table:

| 2.125F angle | $\sin(2.125F + \alpha)$ | $\cos(2.125F + \alpha)$ |
|---|---|---|
| 0° | sin α | cos α |
| 90° | cos α | -sin α |
| 180° | -sin α | -cos α |
| 270° | -cos α | sin α |

It will be observed from FIG. 1 that the selection of clock and sampling frequencies results in a most useful direct sampling approach for GPS receivers. In particular, the clock frequency selected provides a sampled carrier frequency of 2F (plus Doppler) for both the L1 and L2 signals, which ensures that the resulting spread spectrum of received GPS signals extends over only positive frequencies. It will be understood that the invention has been described in detail for purposes of illustration, and that other implementations may also fall with the intended scope of the invention, which should be limited only by the appended claims.

## Claims

1.  For use in a global positioning system (GPS) receiver, a GPS direct sampling system, comprising:

    an antenna circuit for receiving GPS signals transmitted from multiple GPS satellites as spread spectrum signals in at least one frequency band having a central carrier frequency;
    filtering and amplifying means, for separating the received GPS signals into a frequency band corresponding to the transmitted signals; and
    means for sampling the signals in the frequency band at a sampling rate derived from a common clock signal generator, wherein the means for sampling the signals produces for the frequency band a digitized spread spectrum signal that extends over a range that excludes a frequency of zero and thus preserves the real-valued nature of the sampled signals, and wherein the means for sampling the signals provides a sampled carrier frequency having the lowest possible value that will result maintaining the real-valued nature of the sampled signals.

2.  A GPS direct sampling system as defined in claim 1, wherein:

    the GPS direct sampling system processes GPS signals transmitted as spread spectrum signals in two frequency bands having separated central carrier frequencies;
    the two received GPS signals have carrier frequencies of 308F and 240F, respectively, plus a Doppler frequency correction, where F=5.115 MHz (megahertz);
    the means for sampling the signals includes two analog-to-digital converters connected to receive the separated GPS signals from the filtering and amplifying means, a sample clock signal generator for providing sample clock signals at rates of 306F and 238F, respectively; and
    the analog-to-digital converters both produce digital output signals at sampled signal carrier rates of 2F , plus a Doppler component.

3. A GPS direct-sampling system as defined in claim 2, wherein:

the sample clock generator is a single clock signal generator operating at a frequency of 8.5F and capable of providing aliasing components at 306F and 238F megahertz, for use as sample clock signals in the respective analog-to-digital converters.

4. A GPS direct-sampling system as defined in claim 3, and further comprising:

clock processing circuitry coupled to the sample clock generator, for generating a stream of phase angles corresponding to a signal at frequency 2F ;
means for combining the phase angles corresponding to frequency 2F with phase angles corresponding to the Doppler frequency component associated with each of the two GPS signals from each satellite, to produce a stream of successive phase angles corresponding to a frequency of 2F plus a Doppler component;
means for looking up sine and cosine values corresponding to the successive phase angles; and
means for multiplying the sine and cosine values by corresponding digital samples obtained from the respective analog-to-digital converters, to obtain a succession of sine and cosine signal products from which in-phase (I) and quadrature (Q) components of the received signals may be conventionally computed.

5. A method for obtaining digitized global positioning system (GPS) signals by direct sampling in a GPS receiver, the method comprising the steps of:

receiving GPS signals transmitted from multiple GPS satellites as a spread spectrum signal in at least one frequency band having a carrier frequency;
separating the received GPS signals into a frequency band by filtering and amplifying the received signals; and
sampling the signals in the frequency band at sampling rates derived from a common clock signal generator, wherein the sampling step produces a digitized spread spectrum signal that extends over a range that excludes a zero frequency, and wherein the sampling step provides a sampled carrier frequency having the lowest value that will result in locating the spread spectrum signal in such a range and will thereby preserve the real-valued nature of the signal samples.

6. A method as defined in claim 5, wherein:

the receiving, separating and sampling steps pertain to receiving separating and sampling GPS signals transmitted in two separate frequency bands and separate carrier frequencies;
the two received GPS signals have carrier frequencies of 308F and 240F, respectively, plus a Doppler frequency correction, where F=5.115 MHz (megahertz); and
the sampling step includes performing an analog-to-digital conversion of the separated GPS signals, and controlling the analog-to-digital conversion with sample clock rates of 306F and 238F, respectively for the two GPS signals;
and wherein the step of performing analog-to-digital conversion results in digital output signals at a sampled carrier frequency of 2F , plus a Doppler component, for both GPS signals.

7. A method as defined in claim 6, wherein:

the sampling step includes providing sample clock signals at frequencies 306F and 238F, respectively, from a single clock generator operating at 8.5F and capable of providing aliasing components at 306F and 238F .

8. A method as defined in claim 7, and further comprising:

generating from the single clock generator a stream of phase angles corresponding to a signal at frequency 2F ;
combining the phase angles corresponding frequency 2F with phase angles corresponding to the Doppler frequency component associated with each of the two GPS signals from each satellite, to produce a stream of successive phase angles corresponding to a frequency of 2F plus a Doppler component;
looking up sine and cosine values corresponding to the successive phase angles obtained from the combining step; and
multiplying the sine and cosine values by corresponding digital sample values obtained from the respective analog-to-digital conversions, to obtain a succession of sine and cosine products from which in-phase (I) and quadrature (Q) component of the received signals may be conventionally computed.

FIG. 1

FIG. 2